# EUROPÄISCHE PATENTSCHRIFT

(11) **EP 1 473 538 B1**
(45) Veröffentlichungstag und Bekanntmachung des Hinweises auf die Patenterteilung: **03.12.2008**
(21) Anmeldenummer: 04008395.8
(22) Anmeldetag: 07.04.2004
(51) Int. Cl.: G01B 5/00

(54) **Messschlitten**
Measurement slides
Glissière de mesure

(30) Priorität: 02.05.2003 DE 10320033
(43) Veröffentlichungstag der Anmeldung: 03.11.2004
(73) Patentinhaber: Junker & Partner GmbH, 66636 Tholey (DE)
(72) Erfinder: Junker, Franz-Rudolf, 66636 Tholey-Sotzweiler (DE); Huber, Alfred, 66571 Eppelborn (DE)
(74) Vertreter: Bernhardt, Reinold

(56) Entgegenhaltungen:
- US-A- 1 449 463
- US-A- 2 608 897
- US-A- 3 867 763
- US-A- 4 652 095
- US-A- 5 303 035

## Beschreibung

Die Erfindung betrifft einen Schlitten für die Aufnahme eines Messtasters, Messobjekts oder dergleichen, mit blockartig ausgebildeten, zueinander gegen die Kraft einer Schraubenfeder bewegbaren Schlittenteilen, wobei die Feder in einer in einem der Schlittenteile vorgesehenen Bohrung sitzt.

Ein derartiger Schlitten ist aus der US 4,652,095 bekannt, in der eine Vorrichtung zur Positionierung von optischen Komponenten beschrieben ist. Der Schlitten ist verschiebbar zwischen zwei miteinander verbundenen Blöcken, die Bohrungen aufweisen, an Schienen geführt. In der Bohrung in einem der Blöcke sitzt eine Seite der Feder, die mit ihrer anderen Seite gegen den Schlitten drückt. Durch die Bohrung in dem anderen Block hindurch ist eine Stellschraube mit Griff geführt, mit der sich die Position des Schlittens verschieben lässt.

Durch Benutzung sind ferner als Kreuzschlitten ausgebildete Schlitten für die Aufnahme von Messtastern bekannt, deren Schlittenteile durch Schraubenfedern beaufschlagbar sind, welche in Bewegungsrichtung an den Enden der Schlittenteile angreifen. Solche Messschlitten kommen z.B. in Vorrichtungen für die Vermessung von Fahrzeugkarosserieteilen zum Einsatz.

Der vorliegenden Erfindung liegt die Aufgabe zugrunde, einen Schlitten der eingangs genannten Art mit einer verbesserten Kopplung der Schlittenteile untereinander zu schaffen.

Der diese Aufgabe lösende Schlitten nach der Erfindung ist dadurch gekennzeichnet, dass die Bohrung einen zu dem anderen Schlittenteil offenen Längsschlitz aufweist, durch den hindurch ein mit dem anderen Schlittenteil verbundener Anschlag für die Feder in die Bohrung hinein vorsteht und die Feder vollständig innerhalb der Bohrung angeordnet ist.

Ein solcher Schlitten lässt sich in kompakter Form herstellen. Bedarf an Einbauraum für außerhalb der Schlittenteile angeordnete Federn entfällt.

Bei dem Schlitten kann es sich um einen Kreuzschlitten handeln, in welchem der genannte andere Schlittenteil einen Mittelblock bildet. Vorzugsweise sind zwei, durch den Anschlag in entgegengesetzten Richtungen zusammendrückbare Federn vorgesehen, die zweckmäßig in einer einzigen Bohrung angeordnet sind.

Vorzugsweise ist die Feder in einer separaten, in die Bohrung eingesetzten Hülse angeordnet, die als vormontierte Baugruppe die Montage des Schlittens erleichtert.

In der bevorzugten Ausführungsform der Erfindung ist die Bohrung eine Durchgangsbohrung und die Hülse an dem Schlittenteil durch an den Bohrungsenden gegen den Schlittenteil anliegende Endkappen festgelegt.

In weiterer Ausgestaltung der Erfindung ist eine gewünschte Ausgangsposition der Schlittenteile, in welcher zwischen den Schlittenteilen keine Federkraft wirkt, einstellbar.

Diese Ausgangsposition kann mit einer Referenzposition der Schlittenteile zusammenfallen, welche sich dadurch herstellen lässt, dass gemäß einem weiteren Ausführungsbeispiel für die vorliegende Erfindung an den Schlittenteilen Ausleger bzw. Ansätze mit axial zueinander ausrichtbaren Passbohrungen gebildet sind. Durch in die Passbohrungen eingeführte Passstifte lassen sich die Schlittenteile in der Referenzposition exakt fixieren.

Zur Einstellung der gewünschten Ausgangsposition kann vorgesehen sein, dass die Federn jeweils mit einem Ende gegen eine der Kappen und mit dem anderen Ende gegen eine Gewindebuchse anliegen, in welche eine durch die betreffende Kappe geführte, gegen die Kappe axial bewegliche Einstellschraube eingedreht ist. Durch Drehung der Einstellschrauben lassen sich die drehfest in der Hülse angeordneten Gewindebuchsen verschieben, so dass sie, z.B. in der Referenzposition, gegen den Anschlag anliegen.

In weiterer Ausgestaltung der Erfindung kann der Schlitten eine die Bewegung der Schlitten gegeneinander begrenzende Anschlageinrichtung aufweisen, wobei eine solche Anschlageinrichtung z.B. zueinander im Abstand angeordnete Schrauben umfasst, die in eine Durchgangsbohrung mit Innengewinde in dem einen Schlittenteil eingedreht sind, wobei die Durchgangsbohrung einen zu dem anderen Schlittenteil offenen Längsschlitz aufweist, durch den hindurch ein von dem anderen Schlittenteil vorstehender Anschlag zwischen den Schrauben in die Durchgangsbohrung eingreift. Durch Drehung der Schrauben lässt sich der Abstand zwischen den Schraubenenden und dadurch der Verschiebeweg des Anschlags begrenzen.

Zweckmäßig sind dieser Anschlag, wie auch der weiter obengenannte Anschlag durch Schrauben gebildet, die in eine Gewindebohrung in dem anderen Schlittenteil eingedreht sind.

Bei den Schrauben handelt es sich zweckmäßig um Madenschrauben, und es sind ferner in die Durchgangsbohrung eindrehbare Konterschrauben vorgesehen, durch die sich die Madenschrauben in gewünschten Positionen fixieren lassen.

In die Durchgangsbohrung kann anstelle der Schrauben und ggf. Kantenschrauben ein länglicher Messtaster eingesetzt werden.

Die Erfindung soll nun anhand von Ausführungsbeispielen und der beiliegenden, sich auf diese Ausführungsbeispiele beziehenden Zeichnungen näher erläutert werden. Es zeigen:
- Fig. 1: ein erstes Ausführungsbeispiel für einen Schlitten nach der Erfindung in einer teilweise geschnittenen Seitenansicht,
- Fig. 2: den Schlitten von Fig. 1 in einer teilweise geschnittenen Draufsicht,
- Fig. 3: ein weiteres Ausführungsbeispiel für einen Schlitten nach der Erfindung in einer teilweise geschnittenen Draufsicht, und
- Fig. 4: den Schlitten von Fig. 3 in einer geschnittenen Seitenansicht.

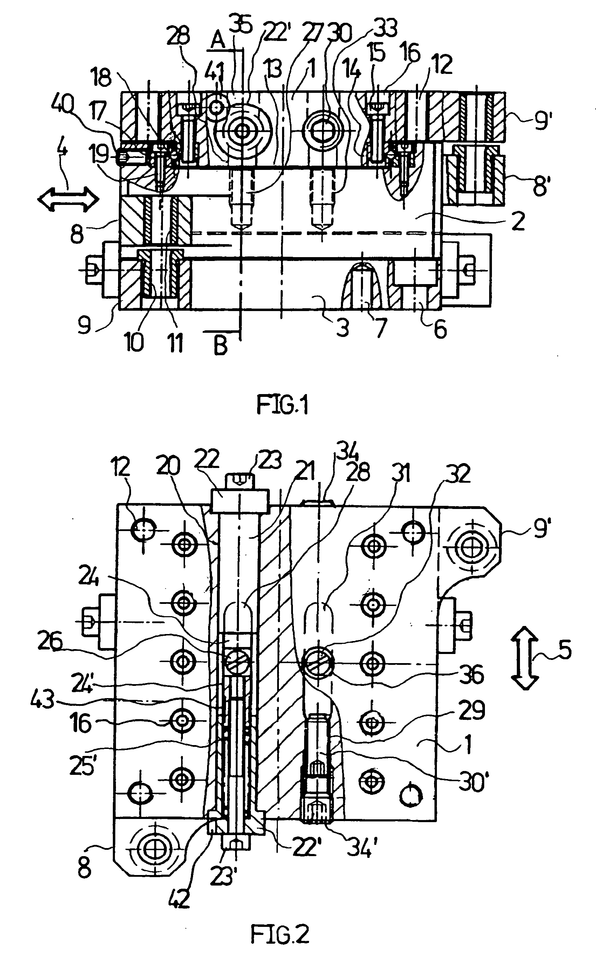

Ein in Fig. 1 und 2 gezeigter Kreuzschlitten weist blockartige Schlittenteile 1,2 und 3 auf, wovon der Schlittenteil 3 zur Befestigung an einem Träger vorgesehen ist. Auf dem untersten Schlittenteil 3 lässt sich der mittlere Schlittenteil 2 gemeinsam mit dem obersten Schlittenteil 1 gemäß Doppelpfeil 4 hin- und herbewegen. Der Schlittenteil 1 ist auf dem Schlittenteil 2 seinerseits in Richtung eines in Fig. 2 gezeigten Doppelpfeils 5 hin- und herbewegbar.

Der Schlittenteil 3 weist mehrere Bohrungen 6 zur Schraubbefestigung an dem genannten Träger sowie Passstifte aufnehmende Passbohrungen zur genauen Positionierung am Träger auf.

Von den Schlittenteilen 2 und 3 stehen an einer Ecke Ansätze 8 und 9 vor, welche jeweils einen Buchseneinsatz 10 bzw. 11 zur Bildung von Passbohrungen aufweisen. Zu den Ansätzen 8 und 9 diagonal gegenüberliegend sind an den Schlittenteilen 1 und 2 entsprechende Ansätze 8' und 9' mit entsprechenden Buchsenteilen vorgesehen. An allen vier Ecken des obersten Schlittenteils 1 sind Bohrungen 12 für die Schraubbefestigung von Teilen, z.B. Messtastern oder Träger von Messtastern, vorgesehen.

Bis auf die genannten Bohrungen 6 und 12 stimmen der Schlittenteil 1 und der Schlittenteil 3 im Aufbau überein. Auf den Schlittenteil 3 wird daher nicht weiter eingegangen.

Der Schlittenteil 1 weist einen Vorsprung 13 auf, der in eine Ausnehmung in dem Schlittenteil 2 eingreift. Durch den Vorsprung 13 sind zwei Ecken gebildet, in denen jeweils eine Führungsschiene 14 angeordnet ist. Zur Befestigung der Führungsschienen dienen jeweils fünf Schrauben 15, welche durch entsprechende Bohrungen 16 in dem Schlittenteil 1 geführt sind und in ein Gewinde in der Führungsschiene 14 eingreifen.

In entsprechenden Ecken der genannten Ausnehmung des Schlittenteils 2 sind Führungsschienen 17 angeordnet, wobei die Führungsschienen 17 an den Führungsschienen 14 über Kugeln 18 gelagert sind. Zur Befestigung der Führungsschienen 17 an dem Schlittenteil 2 dienen Schrauben 19.

Über Schrauben 40, welche seitlich an den Führungsschienen 17 angreifen, lässt sich das Lagerspiel zwischen den Führungsschienen 14 und 17 einstellen.

In Richtung des Doppelpfeils parallel zu den Führungsschienen 14,17 erstreckt sich im Schlittenteil 1 eine durchgehende Bohrung 20, in welcher eine Hülse 21 angeordnet und durch Kappen 22 und 22' an dem Schlittenteil festgelegt ist. Zur Drehsicherung der Hülse 21 dient eine Schraube, welche in eine Bohrung 41 im Schlittenteil 1 eindrehbar ist und mit ihrem Kopf in eine Randausnehmung 42 in der Kappe 22' eingreift.

Durch jede der Kappen 22 und 22' ist, axial beweglich, eine Schraube 23 bzw. 23' geführt und in eine in der Hülse 21 angeordnete Gewindebuchse 24 bzw. 24' eingedreht. Die Gewindebuchsen sind in der Hülse 21 durch einen Zapfen, der in einen Längsschlitz 43 in der Buchse eingreift, um die Buchsenachse drehfest gelagert und in Richtung der Buchsenachse verschiebbar.

Koaxial zu jeder der Schrauben 23,23' ist eine Schraubenfeder angeordnet, von denen in Fig. 2 eine Schraubenfeder 25' sichtbar ist. Die Schraubenfeder 25' liegt mit einem Ende gegen die Gewindebuchse 24' und mit dem anderen Ende gegen die Kappe 22' an. Das der Schraubenfeder 25' abgewandte Ende der Gewindebuchse 24' ist gegen eine Schraube 26 anlegbar, welche in ein Gewinde 27 in dem Schlittenteil 2 eingedreht ist und durch einen Längsschlitz 28 in dem Schlittenteil 1 und der Hülse 21 hindurch in die Hülse 21 hinein vorsteht.

In dem Schlittenteil 1 ist eine weitere, in Verschiebungsrichtung der Schlittenteile 1,2 verlaufende Durchgangsbohrung 29 gebildet, welche Gewinde für zwei Madenschrauben aufweist, von denen eine Schraube 30' sichtbar ist.

Durch einen zu der Durchgangsbohrung 29 und dem Schlittenteil 2 offenen Längsschlitz 31 hindurch steht eine Schraube 32 vor, die in ein Gewinde 33 in dem Schlittenteil 2 eingedreht ist und einen Anschlag für die Madenschraube 30 bzw. die der Madenschraube 30' gegenüberliegende, nicht sichtbare Madenschraube bildet. In Endeinsenkungen der Durchgangsbohrung 29 sind Konterschrauben 34 und 34' zur Festlegung der Madenschrauben in einer gewünschten Stellung eindrehbar.

Im folgenden wird die Funktionsweise des vorangehend beschriebenen Schlittens erläutert.

Die Schlittenteile 1 und 2 des über den Schlittenteil 3 an einem Träger befestigten Schlittens werden zunächst in eine Referenzposition gebracht, indem die in den Ansätzen 8 und 9 bzw. 8' und 9' durch die Buchseneinsätze 10 und 11 gebildeten Passbohrungen durch Einführung von Passstiften zueinander ausgerichtet werden. In dieser Referenzposition werden durch Drehung der Schrauben 23 und 23' die betreffenden Buchsenteile 24 und 24' mit ihrem den Schrauben abgewandtem Ende in Anlage gegen die einen Anschlag bildende Schraube 26 gebracht. Entsprechende Einstellungen erfolgen auch am Schlittenteil 3. Damit ist gesichert, dass in der Referenzposition keine Federkraft wirkt und erst bei Auslenkung aus der Referenzposition in der einen oder anderen Richtung der Schlittenteil 1 gegen die Kraft einer der beiden Federn bewegt werden muß.

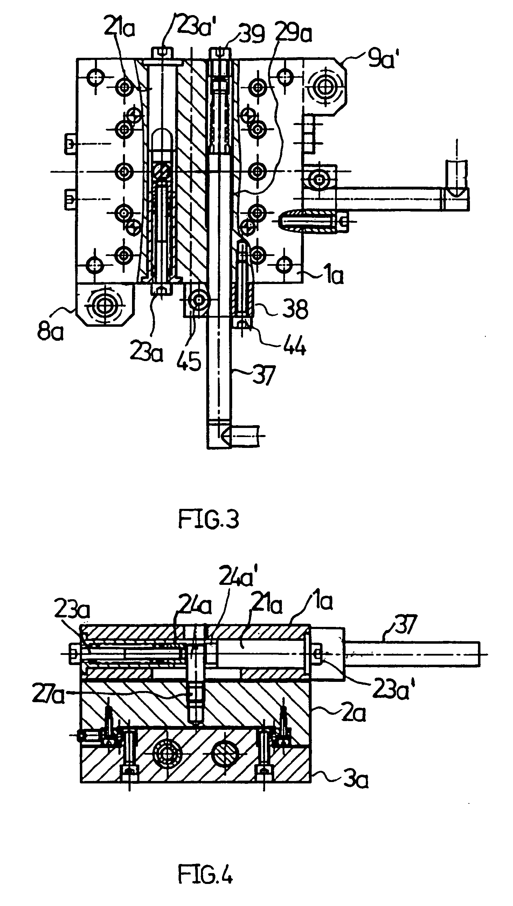

Durch die mehr oder weniger weit in die Durchgangsbohrung 29 eindrehbaren Madenschrauben können der Bewegungsspielraum des Kopfes der Schraube 32 innerhalb des Längsschlitzes 31 in gewünschtem Maße verändert werden. In waagerechter Stellung kehrt der Schlitten stets selbsttätig in die Referenzposition zurück. Es wird nun auf Fig. 3 und 4 Bezug genommen, wo gleiche oder gleichwirkende Teile mit derselben Bezugszahl wie in Fig. 1 und 2 bezeichnet sind und der betreffenden Bezugszahl jeweils der Buchstabe a beigefügt ist.

Das Ausführungsbeispiel von Fig. 3 und 4 unterscheidet sich von dem vorangehenden Ausführungsbeispiel dadurch, dass anstelle von Einrichtungen zur Begrenzung des Schlittenhubs in einer Durchgangsbohrung 29a ein Messtaster 37 angeordnet ist. In dem betreffenden Ausführungsbeispiel weist das längliche Messtastergehäuse einen solchen Außendurchmesser auf, dass der Messtaster 37 gegen die Madenschrauben in der Durchgangsbohrung 29 des Schlittens gemäß Fig. 1 und 2 austauschbar wäre.

Zur Befestigung des Messtasters 37 am Schlitten dienen eine in die Durchgangsbohrung 29a eindrehbare, gegen ein Ende des Tasters anliegende Schraube 39 sowie ein Ansatzstück 38, welches durch Schrauben 44 mit dem Schlittenteil 1 a verbindbar ist. In dem geschlitzten Ansatzstück 38 lässt sich der Messtaster 37 mit Hilfe einer Schraube 45 einklemmen.

## Patentansprüche

1. Schlitten für die Aufnahme eines Messtasters oder Messobjekts, mit blockartig ausgebildeten, zueinander gegen die Kraft einer Schraubenfeder (25') bewegbaren Schlittenteilen (1-3), wobei die Feder (25') in einer in einem (1,3) der Schlittenteile (1-3) vorgesehenen Bohrung (20) sitzt, **dadurch gekennzeichnet,**
**dass** die Bohrung (20) einen zu dem anderen Schlittenteil (2) offenen Längsschlitz (28) aufweist, durch den hindurch ein mit dem anderen Schlittenteil (2) verbundener Anschlag (26) für die Feder (25') in die Bohrung (20) hinein vorsteht und die Feder (25') vollständig innerhalb der Bohrung (20) angeordnet ist.

2. Schlitten nach Anspruch 1,
**dadurch gekennzeichnet,**
**dass** zwei, durch den Anschlag (26) in entgegengesetzten Richtungen zusammendrückbare Federn (25'), vorzugsweise angeordnet in einer einzigen Bohrung (20), vorgesehen sind.

3. Schlitten nach Anspruch 1 oder 2,
**dadurch gekennzeichnet,**
**dass** die Feder (25') in einer separaten, drehfest in die Bohrung (20) eingesetzten Hülse (21) angeordnet ist.

4. Schlitten nach Anspruch 3,
**dadurch gekennzeichnet,**
**dass** die Bohrung (20) eine Durchgangsbohrung ist, und die Hülse (21) durch an den Enden der Bohrung (20) gegen den Schlittenteil (1,3) anliegende Endkappen (22,22') an dem Schlittenteil (1,3) axial festgelegt ist.

5. Schlitten nach einem der Ansprüche 1 bis 4,
**dadurch gekennzeichnet,**
**dass** eine Position der Schlittenteile (1-3) zueinander, in welcher zwischen den Schlittenteilen (1-3) keine Federkraft wirkt, verstellbar ist.

6. Schlitten nach Anspruch 5,
**dadurch gekennzeichnet,**
**dass** die Federn (25') jeweils mit einem Ende gegen eine der Kappen (22,22') und mit dem anderen Ende gegen eine in der Bohrung (20) bzw. Hülse (21) drehfest und axial verschiebbar gelagerte Gewindebuchse (24,24') anliegen, in welche eine durch die Kappe (22,22') geführte, gegen die Kappe bewegliche Einstellschraube (23,23') eingedreht ist.

7. Schlitten nach einem der Ansprüche 1 bis 6,
**dadurch gekennzeichnet,**
**dass** Anschlageinrichtungen (30-34) zur Begrenzung der Bewegung der Schlittenteile (1-3) zueinander vorgesehen sind.

8. Schlitten nach Anspruch 7,
**dadurch gekennzeichnet,**
**dass** die Anschlageinrichtungen (30-34) Schrauben (30') umfassen, die zueinander im Abstand in einer mit einem Innengewinde versehenen Durchgangsbohrung (29) angeordnet sind, wobei die Durchgangsbohrung (29) einen zu dem anderen Schlittenteil (2) offenen Längsschlitz (31) aufweist, durch den hindurch ein von dem anderen Schlittenteil (2) vorstehender Anschlag (32) zwischen den Schrauben (30') in die Durchgangsbohrung (29) eingreift.

9. Schlitten nach Anspruch 8,
**dadurch gekennzeichnet,**
**dass** es sich bei den Schrauben um Madenschrauben (30') handelt und in die Durchgangsbohrung (29) ferner Konterschrauben (34,34') zur Fixierung der Madenschrauben (30') in einer gewünschten Position eindrehbar sind.

10. Schlitten nach einem der Ansprüche 1 bis 9,
**dadurch gekennzeichnet,**
**dass** an den Schlittenteilen (1-3) Ansätze (8,9) mit durch einen Passstift axial zueinander ausrichtbaren Passbohrungen gebildet sind.

11. Schlitten nach einem der Ansprüche 1 bis 10,
**dadurch gekennzeichnet,**
**dass** der Schlitten ein Kreuzschlitten ist, und der andere Schlittenteil (2) einen Mittelblock des Kreuzschlittens bildet.

## Claims

1. Slide for holding a sensing probe or measurement object, having slide parts (1-3) of block-type design which can be moved relative to one another against the force of a helical spring (25'), the spring (25') being seated in a bore (20) provided in one (1-3) of the slide parts (1-3), **characterized in that** the bore (20) has a longitudinal slot (28) which is open towards the other slide part (2) and through which there protrudes into the bore (20) a stop (26) for the spring (25'), connected to the other slide part (2) and the spring (25') is arranged completely inside the bore (20).

2. Slide according to Claim 1, **characterized in that** two springs (25'), preferably arranged in a single bore (20), which can be compressed in opposite directions by the stop (26) are provided.

3. Slide according to Claim 1 or 2, **characterized in that** the spring (25') is arranged in a separate sleeve (21) inserted into the bore (20) in a rotationally fixed fashion.

4. Slide according to Claim 3, **characterized in that** the bore (20) is a through-bore, and the sleeve (21) is fixed axially on the slide part (1, 3) by an end cap (22, 22') bearing against the slide part (1, 3) at the ends of the bore (20).

5. Slide according to one of Claims 1 to 4, **characterized in that** it is possible to adjust a position of the slide parts (1-3) relative to one another in which no spring force acts between the slide parts (1-3).

6. Slide according to Claim 5, **characterized in that** the springs (25') respectively bear with one end against one of the caps (22, 22') and with the other end against a threaded bushing (24, 24'), which is mounted in the bore (20) or sleeve (21) in a fashion which is rotationally fixed and axially displaceable, and into which there is turned a setting screw (23, 23') which is guided through the cap (22, 22') and can move against the cap.

7. Slide according to one of Claims 1 to 6, **characterized in that** stop devices (30-34) are provided for limiting the movement of the slide parts (1-3) relative to one another.

8. Slide according to Claim 7, **characterized in that** the stop devices (30-34) comprise screws (30') which are arranged at a spacing from one another in a through-bore (29) provided with an internal thread, the through-bore (29) having a longitudinal slot (31) which is open towards the other slide part (2) and through which there engages between the screws (30') into the through-bore (29) a stop (32) projecting from the other slide part (2).

9. Slide according to Claim 8, **characterized in that** the screws are setscrews (30'), and furthermore check-screws (34, 34') can be turned into the through-bore (29) in order to fix the setscrews (30') in a desired position.

10. Slide according to one of Claims 1 to 9, **characterized in that** producing parts (8, 9) with locating bores which can be axially aligned with one another by a locating pin are formed on the slide parts (1-3).

11. Slide according to one of Claims 1 to 10, **characterized in that** the slide is a cross slide, and the other slide part (2) forms a middle block of the cross slide.

## Revendications

1. Chariot destiné à recevoir un palpeur de mesure ou un objet de mesure avec des parties (1-3) de chariot réalisées en forme de bloc, pouvant être déplacées l'une par rapport à l'autre contre la force d'un ressort à boudin (25'), le ressort (25') étant situé dans un trou (20) prévu dans une (1, 3) des parties (1-3) du chariot, **caractérisé**
**en ce que** le trou (20) présente une fente longitudinale (28) ouverte vers l'autre partie (2) du chariot, à travers laquelle dépasse une butée (26) pour le ressort (25') dans le trou (20), ladite butée étant reliée à l'autre partie (2) du chariot, et le ressort (25') est complètement agencé dans le trou (20).

2. Chariot selon la revendication 1, **caractérisé**
**en ce qu'**on a prévu deux ressorts (25') pouvant être comprimés par la butée (26) dans des sens opposés, de préférence disposés dans un seul trou (20).

3. Chariot selon la revendication 1 ou 2, **caractérisé**
**en ce que** le ressort (25') est agencé dans un manchon (21) séparé, placé de manière à ne pas pouvoir tourner dans le trou (20).

4. Chariot selon la revendication 3, **caractérisé**
**en ce que** le trou (20) est un alésage débouchant, et le manchon (21) est fixé axialement sur la partie (1, 3) du chariot par des coiffes d'extrémité (22,22') se plaçant aux extrémités du trou (20) contre la partie (1,3) du chariot.

5. Chariot selon l'une quelconque des revendications à 1 à 4, **caractérisé**
**en ce qu'**on peut régler une position des parties (1-3) du chariot les unes par rapport aux autres, dans laquelle aucune force de ressort n'agit entre les parties (1-3) du chariot.

6. Chariot selon la revendication 5, **caractérisé**
**en ce que** les ressorts (25') se placent à chaque fois avec une extrémité contre une des coiffes (22,22') et avec l'autre extrémité contre une douille filetée (24,24') logée de manière à ne pas pouvoir tourner et à pouvoir être déplacée axialement dans le trou (20) ou le manchon (21), une vis de réglage (23, 23') étant vissée dans ladite douille filetée, guidée dans la coiffe (22,22'), pouvant être déplacée contre la coiffe.

7. Chariot selon l'une quelconque des revendications à 1 à 6, **caractérisé**
**en ce qu'**on a prévu des dispositifs de butée (30-34) pour limiter le mouvement des parties (1-3) du chariot les unes par rapport aux autres.

8. Chariot selon la revendication 7, **caractérisé**
**en ce que** les dispositifs de butée (30-34) comprennent des vis (30'), qui sont disposées à une certaine distance l'une par rapport à l'autre dans un alésage débouchant (29) pourvu d'un taraudage, l'alésage débouchant (29) présentant une fente longitudinale (31) ouverte vers l'autre partie (2) de chariot, à travers laquelle une butée (32) en saillie de l'autre partie (2) de chariot s'agrippe entre les vis (30') dans l'alésage débouchant (29).

9. Chariot selon la revendication 8, **caractérisé**
**en ce qu'**il s'agit pour les vis de goujons filetés (30') et que des vis de blocage (34, 34') peuvent en outre être vissées dans l'alésage débouchant (29) pour la fixation des goujons filetés (30) dans une position souhaitée.

10. Chariot selon l'une quelconque des revendications à 1 à 9, **caractérisé**
**en ce qu'**on a formé sur les parties (1-3) du chariot des embouts (8,9) avec des trous calibrés alignables axialement l'un par rapport à l'autre par un goujon.

11. Chariot selon l'une quelconque des revendications à 1 à 10, **caractérisé**
**en ce que** le chariot est un chariot croisé et l'autre partie (2) du chariot forme un bloc central du chariot croisé.
